# EUROPEAN PATENT APPLICATION

(11) **EP 3 779 143 A1**
(43) Date of publication of application: **17.02.2021**
(21) Application number: 18913608.8
(22) Date of filing: 05.04.2018
(51) Int. Cl.: F02B 37/18

(54) **WASTE GATE VALVE**

(71) Applicant: Nittan Valve Co., Ltd., Hadano-shi, Kanagawa 257-0031 (JP)
(72) Inventor: MIKAMI Maiku, Hadano-shi, Kanagawa 257-0031 (JP)
(74) Representative: Rings, Rolf
(86) International application number: PCT/JP2018/014596
(87) International publication number: WO 2019/193711

(57) **Abstract**

Provision of a wastegate valve permitting achievement in reduction in overall weight and decrease in cost due to having made an attachment plate more compact. A wastegate valve (50) formed such that the overall shape thereof is approximately L-shaped as seen in plan view and such that a rotary shaft (58) extends, in a direction approximately perpendicular to a central axis (O) of a valve body (56) and in such fashion as to be offset from the valve body (56), from an attachment plate (52) which supports the valve body (56); wherein a rotary shaft main body (58A) is secured by solid-phase welding to a side of the attachment plate (56). By making an attachment plate (56) more compact, reduction in overall weight and decrease in cost of a valve (50) are achieved, and constraints that would otherwise apply to design of an exhaust gas flow path (9) provided with a bypass flow path (10) are also alleviated.

## Description

### TECHNICAL FIELD

The present invention pertains to a wastegate valve that is provided at an exhaust gas flow path in an engine which is turbocharged through use of a turbocharger and that adjusts the amount of exhaust gas which flows into a turbine by causing diversion of a portion of the exhaust gas, and in particular relates to a wastegate valve which is formed such that the overall shape thereof is approximately L-shaped as seen in plan view and in which a rotary shaft extends, in a direction approximately perpendicular to the central axis of a valve body and in such fashion as to be offset from the valve body, from an attachment plate that supports the valve body.

### BACKGROUND ART

Exhaust turbine turbochargers for improving engine performance and reducing fuel consumption are known. In addition, exhaust turbine turbochargers are constituted such that engine exhaust gas made to enter thereinto from an exhaust gas inlet causes rotation of a turbine impeller provided at the turbine housing and is thereafter discharged from an exhaust gas outlet to an exhaust gas flow path.

At Patent Reference No. 1, below, to regulate turbocharged pressure supplied to an engine, wastegate valve 11 is provided at bypass flow path 10 which extends between exhaust gas inlet 3 and exhaust gas outlet 8; for example, when turbocharged pressure exceeds a set value, wastegate valve 11 might open and cause a portion of the exhaust gas directed toward turbine impeller 4 to be directed from bypass flow path 10 to exhaust gas flow path 9 so as to prevent turbocharged pressure from becoming excessive.

More specifically, wastegate valve 11 is formed such that the overall shape thereof is approximately L-shaped as seen in plan view and is such that rotary shaft 13 extends, in a direction approximately perpendicular to the central axis of valve body 12 and in such fashion as to be offset from valve body 12, from attachment plate 17 which supports valve body 12. Rotary shaft 13 of wastegate valve 11, which extends all the way through bypass flow path 10 so as to emerge at the exterior of turbine housing 1, is made to rotate by actuator 16. Valve body 12 is disposed so as to make contact with valve seat surface 10a, rotation of rotary shaft 13 causing valve body 12 to separate from valve seat surface 10a, opening valve 11.

Furthermore, wastegate valve 11 might, for example, be constituted such that rotary shaft 13 is secured to attachment plate 17 as a result of having been arc-welded thereto, swaging being carried out to secure valve body 12 by way of attachment dowel 23 and washer 24 so that it does not come free of attachment plate 17.

### PRIOR ART REFERENCES

### PATENT REFERENCES

Patent Reference No. 1: Japanese Patent Application Publication Kokai No. 2013-2431 (see paragraphs 0016-0021 and FIGS. 1, 2, and 3)

### SUMMARY OF INVENTION

### PROBLEM TO BE SOLVED BY INVENTION

However, because wastegate valve 11 is exposed to high-temperature exhaust gas, not only valve body 12 but also rotary shaft 13, attachment plate 17, washer 24, and all of the other valve constituent members will be made of heat-resistant alloy, the cost of which will increase as a function of the operating temperature limit of the alloy employed, thus causing increase in the unit cost of valve 11 as well by a corresponding amount.

Furthermore, as rotary shaft 13 is secured by arc welding to attachment plate 17, because arc welding causes occurrence of a weld bead in accompaniment thereto, engagement hole 19 is provided for insertion of rotary shaft 13 into attachment plate 17, the constitution being such as to permit the weld bead to be formed at weld hole 21 which is provided at the wall at which engagement hole 19 is formed.

The size of attachment plate 17 is thus increased by an amount corresponding to that which is necessary to permit provision of engagement hole 19 and weld hole 21. For this reason, it is firstly the case that in addition to the fact that valve 11 is made expensive, increase in the weight of valve 11 can lead to increase in the overall weight of the engine. It is secondly the case that as the space for arrangement of the valve provided at exhaust gas flow path 9 (bypass flow path 10) within turbine housing 1 will be large, this will constitute a constraint when designing an exhaust gas flow path 9 provided with a bypass flow path 10.

The present invention was conceived in light of the foregoing problems in the conventional art, it being an object thereof to provide a wastegate valve that makes it possible to achieve alleviation of constraints that would otherwise apply to design of an exhaust gas flow path provided with a bypass flow path, reduction in weight, and decrease in cost due to having made an attachment plate more compact as a result of causing a rotary shaft main body to be secured by means of solid-phase welding to the attachment plate.

### MEANS FOR SOLVING PROBLEM

To achieve the foregoing object, the invention as recited at claim 1, in the context of a wastegate valve formed such that the overall shape thereof is approximately L-shaped as seen in plan view and such that a rotary shaft extends, in a direction approximately perpendicular to a central axis of a valve body and in such fashion as to be offset from the valve body, from an attachment plate which supports the valve body,
is characterized in that the rotary shaft is constituted from a rotary shaft main body that is solid-phase-welded to a side of the attachment plate.

(EFFECT) By solid-phase welding (e.g., friction welding or resistance welding) one end of a rotary shaft main body to the side of an attachment plate, it is possible to constitute a rotary shaft that extends from the attachment plate. Solid-phase welding can be employed not only to mutually secure metals of the same type but also to mutually secure metals of different types, little time is required for processing, quality (joint strength) is uniform, and because there is little occurrence of burrs along the joint surface, post-processing during which burrs are removed is also easy.

Note that solid-phase welding refers to a joining method in which the members being joined-without being melted and while still in solid phase (solid state)-are softened as a result of application of heat, and are further made to adhere as a result of application of pressure, solid-phase welding in the context of the invention under application including friction welding and resistance welding.

Furthermore, friction welding refers to a method in which members to be joined are made to mutually rub against each other at high speed such that the heat due to friction which is produced at such time causes the members to soften, simultaneous with which pressured is applied thereto, the diffusion of atoms which occurs across the joint surface being utilized to causing joining thereof.

Furthermore, resistance welding refers to a method in which members to be joined are made to mutually overlap, the location to be joined is straddled between electrodes, and a prescribed pressure is applied thereto and electric current is made to flow therethrough, joining occurring as a result of the joint surface having been softened due to the Joule heating produced as a result of the electrical resistance at the region being joined.

At the prior patent reference, because the rotary shaft is arc-welded to the attachment plate, due to the fact that a weld hole for the weld bead and a rotary shaft engagement hole are needed at the attachment plate, this causes the attachment plate to be large in size to a corresponding extent.

However, in accordance with the invention under application, as it is sufficient that the rotary shaft main body is solid-phase-welded to the side of the attachment plate, it is possible to cause the attachment plate, which is constituted from expensive heat-resistant metal, to be made more compact. For this reason, it is firstly the case that the cost of the wastegate valve can be reduced, and it will also be possible to reduce overall weight. It is secondly the case that as the wastegate valve is arranged in the vicinity of the valve seat surface at the exhaust gas flow path (bypass flow path) within the turbine housing, and as the space required for arrangement of the valve is small, it will be possible to alleviate the constraint that would otherwise exist when designing an exhaust gas flow path provided with a bypass flow path.

Furthermore, as compared with a valve body and an attachment plate that are arranged within the exhaust gas flow path and are directly exposed to exhaust gas, a rotary shaft that bears on a through-hole provided in the turbine housing will not need to be as heat-resistant as the valve body or the attachment plate to the extent that heat transmitted thereto from the attachment plate is dissipated to the turbine housing.

For this reason, by for example causing the rotary shaft main body to be constituted from a metal that is not as heat-resistant as the heat-resistant metal(s) from which the valve body and the attachment plate are constituted, it will be possible to further reduce the cost of the wastegate valve to an extent corresponding to the degree to which the rotary shaft main body is made less expensive.

The invention as recited at claim 2, in the context of the wastegate valve according to claim 1, is characterized in that the rotary shaft is constituted from the rotary shaft main body, and from a boss that is approximately identical in diameter to the rotary shaft main body and that is formed in protruding fashion at the side of the attachment plate.

(EFFECT) Because the rotary shaft main body and the boss at the side of the attachment plate-which are solid-phase-welded (e.g., friction-welded)-are formed so as to be of approximately identical diameter, during solid-phase welding (e.g., friction welding) of the two, it will be possible to cause heat due to friction to be efficiently produced at the abutting surfaces thereof, such that burrs are produced along the outside circumference of said abutting surfaces, and such that solid-phase welding (e.g., friction welding) of said abutting surfaces is carried out in smooth fashion.

Furthermore, the boss which is formed in protruding fashion at the side of the attachment plate, and the rotary shaft main body which is solid-phase-welded to said boss, cooperate to constitute a rotary shaft which extends from the attachment plate, i.e., a rotary shaft which bears on the through-hole provided at the turbine housing.

To the extent that the rotary shaft which extends from the attachment plate is able to cause a portion of the heat that is transmitted thereto from the attachment plate to be dissipated to the turbine housing it will not need to be as heat-resistant as the valve body or the attachment plate, but regions of the rotary shaft that are near the attachment plate will reach temperatures (elevated temperatures) that are close to the temperatures (elevated temperatures) experienced by the attachment plate.

However, at claim 2, regions of the rotary shaft that are near the attachment plate are constituted from a boss that is formed in protruding fashion at the side of the attachment plate, which is to say that they are constituted from the same heat-resistant metal as that from which the attachment plate is constituted, as a result of which the heat resistance (decrease in mechanical strength due to influence of heat) of regions of the rotary shaft that are near the attachment plate does not present a problem.

On the other hand, to the extent that regions of the rotary shaft that are near the attachment plate (the boss that is formed in protruding fashion at the side of the attachment plate) are able to cause heat that is transmitted thereto from the attachment plate to be dissipated to the turbine housing, a region of the rotary shaft that is distant from the attachment plate will not reach temperatures as high as those experienced by regions of the rotary shaft that are near the attachment plate (the boss that is formed in protruding fashion at the side of the attachment plate) and will not need to be as heat-resistant as regions of the rotary shaft that are near the attachment plate (the boss that is formed in protruding fashion at the side of the attachment plate). Accordingly, even where the rotary shaft main body is constituted from a metal of lower heat resistance than that of the heat-resistant metal(s) from which the valve body and the attachment plate are constituted, the possibility that the mechanical strength of the rotary shaft main body will be reduced due to the influence of heat can be eliminated, which is to say that the heat resistance of the rotary shaft main body will not present a problem.

Furthermore, while depending on the properties of the exhaust turbine turbocharger, for example, the temperature of the exhaust gas that flows through the exhaust gas flow path (bypass flow path) will be different, where the temperature of the exhaust gas is high it will be necessary not only that the valve body and the attachment plate be constituted from metal(s) having excellent heat resistance but also that the rotary shaft main body be constituted from metal that to some degree has excellent heat resistance. However, if the length by which a boss which is formed at an attachment plate constituted from heat-resistant metal protrudes therefrom is made large, it will be possible to suppress the influence of heat on a rotary shaft main body that is constituted from a metal of lower heat resistance than that of the metal from which the attachment plate is constituted. That is, it will be possible as a result of adjustment of the length by which the boss protrudes therefrom to select from among a variety of heat-resistant metals from which the rotary shaft main body may be constituted.

On the other hand, if the temperature of the exhaust gas is comparatively low, by causing the length by which a boss which is formed at an attachment plate constituted from heat-resistant metal protrudes therefrom to be made small (causing the length of a rotary shaft main body constituted from a metal of low heat resistance to be made large), working of the boss provided at the attachment plate (e.g., forging of the attachment plate) will be facilitated, there will be an increased number of alternatives in terms of the heat-resistant metal(s) from which the attachment plate and the rotary shaft main body may be constituted, and it will also be possible to achieve further reduction in the cost of the wastegate valve.

By thus adjusting the length by which a boss which is formed at an attachment plate protrudes therefrom in correspondence to the properties of the exhaust turbine turbocharger (exhaust gas temperature) and the desired wastegate valve cost performance, appropriate selection of heat-resistant metal(s) from which the attachment plate and the rotary shaft main body are constituted will be possible.

The invention as recited at claim 3, in the context of the wastegate valve according to claim 1 or 2, is characterized in that the rotary shaft main body is constituted from a hollow pipe.

(EFFECT) In addition to the fact that the attachment plate is made more compact, to the extent that the rotary shaft main body is hollow and lightweight, it will be possible to dramatically reduce the weight of the wastegate valve.

The invention as recited at claim 4, in the context of the wastegate valve according to claim 3, is characterized in that the rotary shaft main body extends all the way through a turbine housing of an exhaust turbine turbocharger, and a hollow portion of said rotary shaft main body is open to an exterior of the turbine housing.

(EFFECT) Convection of air occurs outside the turbine housing where the hollow portion of the rotary shaft main body (hollow pipe) is open to the exterior of the turbine housing. For this reason, because the rotary shaft main body is such that heat transmitted thereto from the attachment plate is dissipated to the turbine housing and is further dissipated by convection of air occurring at the hollow portion, it will be all the more the case that the rotary shaft main body need not be as heat-resistant as the valve body or the attachment plate. Accordingly, even where the rotary shaft main body is constituted from a metal of lower heat resistance than the heat-resistant metal(s) from which the valve body and the attachment plate are constituted, there will be absolutely no possibility that the heat resistance of the main body of the rotary shaft will present a problem.

The invention as recited at claim 5, in the context of the wastegate valve according to any of claims 1 through 4, is characterized in that the valve body is secured to the attachment plate as a result of swaging by way of an attachment dowel and a washer so as not to come free therefrom, and the attachment plate has been shaped as a result of having been forged.

(EFFECT) To manufacture a wastegate valve, an operation in which an attachment plate is forged, an operation in which a rotary shaft main body is solid-phase-welded (e.g., friction-welded), a deburring operation, and an operation in which a through-hole for the attachment plate is formed are conducted during the course of manufacturing a valve manufacturing intermediary at which the rotary shaft extends from the side of the attachment plate and the overall shape of which is approximately L-shaped as seen in plan view, and an operation is lastly carried out in which swaging is performed to secure the valve body to (the through-hole of) the attachment plate of the valve manufacturing intermediary.

In particular, during the operation in which the attachment plate is forged, by also forming this into the shape of a concavity (thin-walled region) corresponding to the through-hole for causing the valve body to be secured thereto by swaging, this will facilitate the procedure by which the through-hole is formed in the concavity (thin-walled region) of the attachment plate during the operation in which the through-hole for the attachment plate is formed that is carried out following the deburring operation which takes place after the solid-phase welding (e.g., friction welding) operation.

The invention as recited at claim 6, in the context of the wastegate valve according to any of claims 1 through 4, is characterized in that the valve body and the attachment plate have been formed into their respective shapes in integral fashion by forging or lost wax casting.

(EFFECT) The valve body and the attachment plate are formed into their respective shapes in integral fashion by forging or lost wax casting, the number of parts from which the wastegate valve is constituted being made small to a corresponding extent.

Furthermore, as a result of carrying out an operation in which a valve body and an attachment plate are formed into their respective shapes in integral fashion, an operation in which the rotary shaft main body is solid-phase-welded (e.g., friction-welded), and a deburring operation, a wastegate valve formed such that the overall shape thereof is approximately L-shaped as seen in plan view and such that a rotary shaft extends from the side of the attachment plate which supports the valve body may be manufactured.

### BENEFIT OF INVENTION

As is clear from the foregoing description, the present invention, because it is such that a rotary shaft main body is secured to an attachment plate by means of solid-phase welding, permits provision of a wastegate valve that makes it possible to achieve alleviation of constraints that would otherwise apply to design of an exhaust gas flow path provided with a bypass flow path, reduction in weight, and decrease in wastegate valve cost due to having made the attachment plate more compact, as compared with a conventional wastegate valve in which a rotary shaft is secured to an attachment plate by means of arc welding.

### BRIEF DESCRIPTION OF DRAWINGS

[FIG. 1] Side view of exhaust turbine turbocharger provided with wastegate valve associated with first embodiment.
[FIG. 2] Front view of same exhaust turbine turbocharger.
[FIG. 3] Rear view of same exhaust turbine turbocharger.
[FIG. 4] Sectional view (sectional view along section IV-IV shown in FIG. 2) showing exhaust gas flow path and bypass flow path.
[FIG. 5] Front perspective view of wastegate valve associated with first embodiment.
[FIG. 6] Exploded perspective view of same wastegate valve.
[FIG. 7] Perspective view showing boss formed in protruding fashion at attachment plate.
[FIG. 8] (a) Front view of same wastegate valve; (b) plan view of same wastegate valve.
[FIG. 9] Vertical sectional view (sectional view along section IX-IX shown in FIG. 8) of same wastegate valve.
[FIG. 10] Sectional view showing wastegate valve installed at turbine housing.
[FIG. 11] (a) Perspective view of attachment plate manufactured through employment of forging operation; (b) vertical sectional view (enlarged sectional view along section X-X shown at (a) in FIG. 10) of same attachment plate.
[FIG. 12] Sectional view showing wastegate valve installed at turbine housing, this wastegate valve being associated with a second embodiment.
[FIG. 13] Sectional view showing wastegate valve installed at turbine housing, this wastegate valve being associated with a third embodiment.
[FIG. 14] Sectional view showing wastegate valve installed at turbine housing, this wastegate valve being associated with a fourth embodiment.
[FIG. 15] Exploded front perspective view of same wastegate valve.

### EMBODIMENTS FOR CARRYING OUT INVENTION

Below, embodiments of the present invention are described with reference to the drawings.

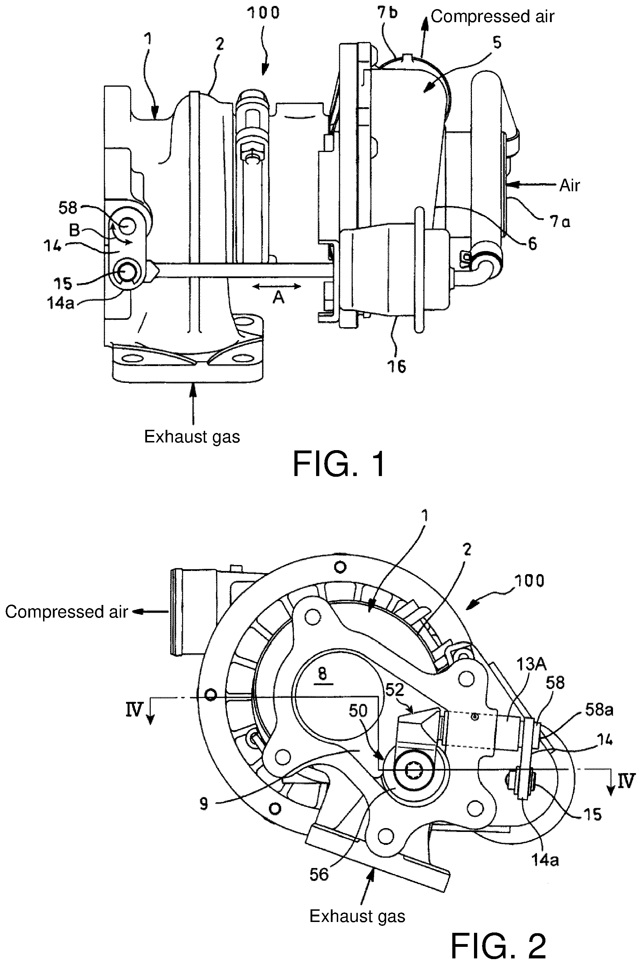

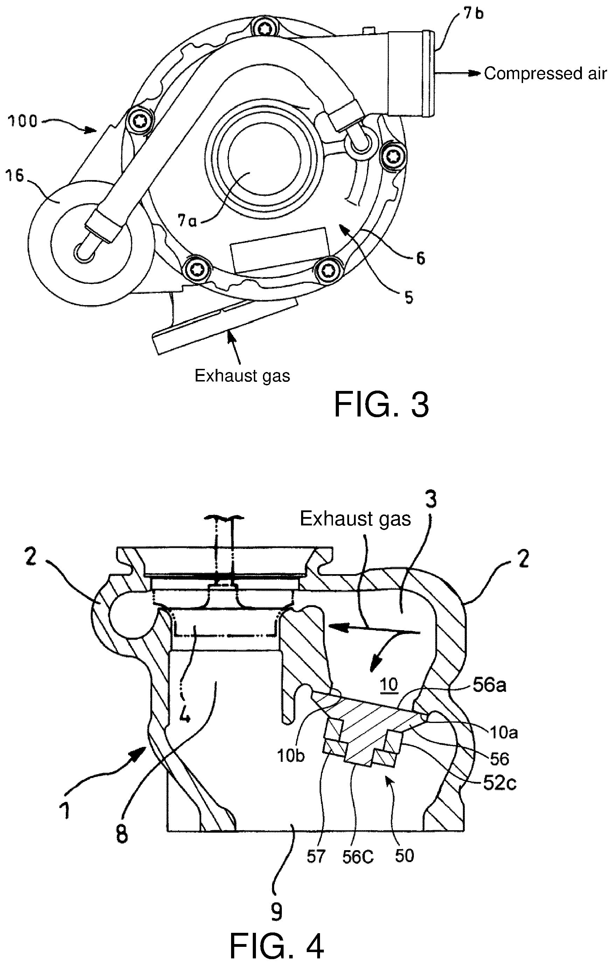

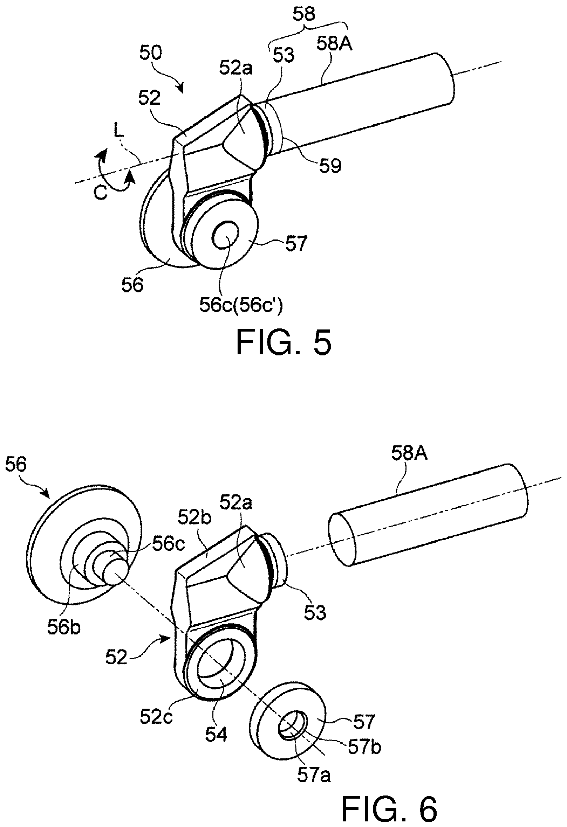

FIGS. 1 through 4 show a working example of an exhaust turbine turbocharger provided with a wastegate valve in accordance with the present invention, the exhaust turbine turbocharger having the same structure as that at prior Patent Reference No. 1 (Japanese Patent Application Publication Kokai No. 2013-2431). More specifically, FIG. 1 is a side view of same exhaust turbine turbocharger, FIG. 2 is a front view of same exhaust turbine turbocharger, FIG. 3 is rear view of same exhaust turbine turbocharger, and FIG. 4 is a sectional view (sectional view along section IV-IV shown in FIG. 2) showing an exhaust gas flow path and a bypass flow path. Furthermore, FIGS. 5 through 10 are drawings showing wastegate valve 50 associated with a first embodiment.

At these drawings, reference numeral 1 is the turbine housing of exhaust turbine turbocharger 100, and within turbine housing 1 exhaust gas from the exhaust manifold of the engine is directed toward exhaust gas inlet 3 (see FIG. 4) of turbine scroll 2, exhaust gas supplied to turbine scroll 2 causing rotation of turbine impeller 4 (see FIG. 4).

Provided within compressor scroll 6 of compressor housing 5 is a compressor impeller (not shown) which is coaxial with turbine impeller 4, rotation of the compressor impeller causing compression of air drawn thereinto from axially centered air intake port 7a, the compressed air being supplied to the engine from compressed air outtake port 7b to turbocharge the engine.

As shown in FIG. 4, after the exhaust gas drives turbine impeller 4, it is discharged to exhaust gas flow path 9 from exhaust gas outlet 8. Furthermore, to control the turbocharged pressure of the compressed air that is supplied to the engine, a bypass flow path 10 for bypass of the exhaust gas is provided between exhaust gas inlet 3 and exhaust gas outlet 8.

In addition, annular valve seat surface 10a is formed at the periphery of circular opening 10b to exhaust gas flow path 9 of bypass flow path 10, wastegate valve 50-which is equipped with valve body 56 that opens and closes opening 10a, which is to say that it opens and closes bypass flow path 10-being provided at a location which is downstream from and in the vicinity of opening 10b (valve seat surface 10a) in such fashion as to make contact with valve seat surface 10a. When turbocharged pressure to the engine exceeds a set value, wastegate valve 50 is such that valve body 56 moves in a direction (downward in FIG. 4) causing it to be separated from valve seat surface 10a, and a portion of the exhaust gas is made to bypass turbine impeller 4 as a result of being sent from bypass flow path 10 to exhaust gas flow path 9.

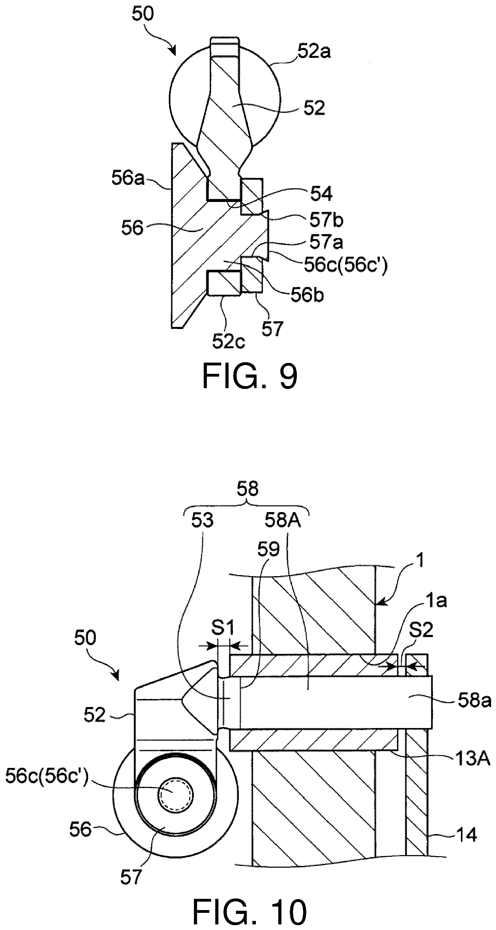

As shown in FIGS. 5 through 10, wastegate valve 50 has a structure such that it is provided with rotary shaft 58 that extends, in offset fashion with respect to valve body 56, from attachment plate 52, which is more or less rectangular as seen in front view and which supports valve body 56; and as shown in FIG. 10, rotary shaft 58 bears on circular-pipe-like bearing 13A which extends all the way through the wall at which turbine housing 1 is formed, the other end 58a thereof being exposed to the exterior of turbine housing 1. Bearing 13A is secured as a result of having been press-fit into through-hole 1a in the wall at which turbine housing 1 is formed. As shown in FIGS. 1, 2, and 10, rotary lever 14 is secured in crankshaft-like fashion to the outer end (other end) 58a of rotary shaft 58, the tip of reciprocating rod 16a of actuator 16 which is secured to compressor housing 5 being coupled by way of drive pin 15 to pivoting tip 14a of rotary lever 14

This being the case, reciprocating action of reciprocating rod 16a due to driving by actuator 16 in the direction indicated by arrow A in FIG. 1 causes rotary lever 14 to pivot in the direction indicated by arrow B at FIG. 1, causing rotary shaft 58 which is secured to rotary lever 14 to rotate in a circumferential direction with respect to bearing 13A. That is, as a result of driving of actuator 16, wastegate valve 50 is made to pivot (rotate) about bearing 13A as indicated by reference numeral C in FIG. 5, which causes opening and closing of valve body 56 with respect to opening 10b (valve seat surface 10a).

As shown in FIG. 10, note that small gaps S1, S2 (e.g., S1 + S2 = 1 mm) are provided between bearing 13A and rotary lever 14 and between bearing 13A and attachment plate 52 of valve 50; while there is play (e.g., 1 mm) in the axial direction between bearing 13A and wastegate valve 50, by causing sealing surface 56a1 of valve body 56 to be formed large relative to annular valve seat surface 10a which is provided at exhaust gas flow path 9 (bypass flow path 10), it is possible to eliminate this play (see FIG. 4).

Actuator 16 might, for example, be constituted as an air-driven diaphragm-type driving apparatus, such that when turbocharged pressure of compressed air exceeds a set value, wastegate valve 50 opens, causing a portion of the exhaust gas to bypass turbine impeller 4 and be discharged from exhaust gas inlet 3 to exhaust gas flow path 9 (see FIG. 4).

The structure of wastegate valve 50 will next be described in detail with reference to FIGS. 5 through 10.

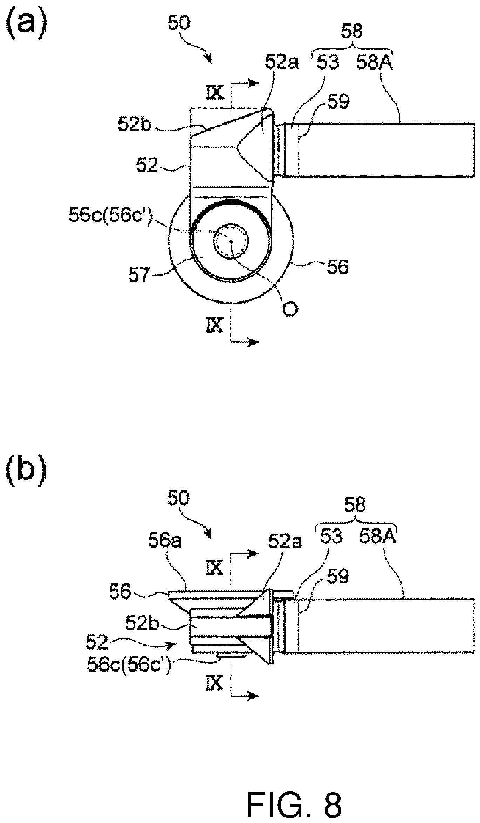

Wastegate valve 50 is provided with attachment plate 52 which is more or less rectangular as seen in front view and which supports valve body 56, and rotary shaft 58 which is joined (secured) by means of friction welding to the side of attachment plate 52 and which extends, in offset fashion with respect to valve body 56, in a direction perpendicular to central axis O of valve body 56, being formed such that the overall shape thereof is approximately L-shaped as seen in plan view (see FIG. 5 and see (a) at FIG. 8).

In addition, rotation of valve 50 about center of rotation L as indicated by arrow C in FIG. 5 causes opening and closing of valve body 56 with respect to valve seat surface 10a (opening 10b).

As shown at (a) and (b) in FIG. 8, discoid protuberance 52a perpendicular to rotary shaft 58 is formed at the side of attachment plate 52 from which rotary shaft 58 extends, cylindrical rotary shaft 58 extending from the end face of protuberance 52a.

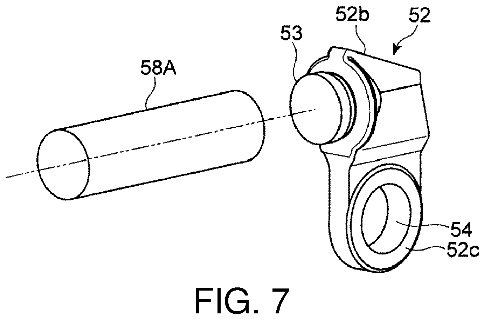

Rotary shaft 58 is constituted by using a friction welding operation, described below, to cause one end face of rotary shaft main body 58A to be joined by means of friction welding to and made integral with the distal face of boss 53 (see FIGS. 6 and 7) which protrudes slightly from the end face of protuberance 52a. Note that reference numeral 59 at FIGS. 5, 8, and 10 indicates the joint (joint surface) between the two members 53, 58A.

Furthermore, the side of attachment plate 52 which is opposite the side at which protuberance 52a is formed is formed in downwardly extending flattened plate-like fashion, and the upper edge 52b thereof is formed in cristate fashion such that what would otherwise be an upper edge right-triangular corner is notched in right-triangular fashion as indicated by the alternating long and short chain line at (a) in FIG. 8, being constituted so as to reduce the amount by which attachment plate 52 protrudes into exhaust gas flow path 9.

That is, as shown in FIGS. 2 and 4, in contradistinction to exhaust gas flow path 9 which is directed toward the front of turbine housing 1 from exhaust gas outlet 8, bypass flow path 10 is provided in parallel fashion with respect to exhaust gas flow path 9 at a location adjacent to and diagonally downward and to the right from said exhaust gas flow path 9 as the exhaust turbine turbocharger is seen in front view, such that it is in communication with exhaust gas flow path 9 by way of opening 10b at which annular valve seat surface 10a is formed.

In addition, wastegate valve 50 is such that sealing surface 56a1 of the valve body 56 thereof is in intimate contact with valve seat surface 10a, and is such that the rotary shaft 58 thereof is disposed in a horizontal direction (the direction connecting the left and right sides in FIGS. 2 and 4) which is more or less perpendicular to bypass flow path 10, as a result of which the side of attachment plate 52 which is opposite the side at which protuberance 52a is formed protrudes into exhaust gas flow path 9. However, because upper edge 52b of attachment plate 52 which protrudes into exhaust gas flow path 9 is formed in cristate fashion such that what would otherwise be an upper edge right-triangular corner is notched in right-triangular fashion as has been described above, the amount by which attachment plate 52 protrudes into exhaust gas flow path 9 is made small, wastegate valve 50 being such that the cross-sectional area of exhaust gas flow path 9 is not reduced by attachment plate 52.

Furthermore, through-hole 54 is provided at discoid lower region 52c of attachment plate 52, swaging being carried out to secure valve body 56 by way of attachment dowel 56c and washer 57 to this through-hole 54 so that it does not come free therefrom.

More specifically, valve body 56 is such that projecting shaft 56b which is capable of passing through through-hole 54 of attachment plate 52 is formed in protruding fashion at the rear surface side of flat sealing surface 56a1, attachment dowel 56c which is capable of engaging with through-hole 57a of washer 57 being formed in protruding fashion at the tip of projecting shaft 56b. In addition, as shown in FIG. 9, projecting shaft 56b of valve body 56 is made to pass through through-hole 54 of attachment plate 52, washer 57 is further made to engage with attachment dowel 56c, and the tip of attachment dowel 56c which protrudes from through-hole 57a of washer 57 is subjected to a swaging process so as to form swaged portion 56c', as a result of which valve body 56 is attached in such state that it is prevented from coming free from through-hole 54 of attachment plate 52 by way of washer 57. Moreover, tapered bevel 57b (see FIG. 9) is formed at the periphery of through-hole 57a of washer 57 on the side thereof at which attachment dowel 56c protrudes, increasing the surface area with which intimate contact is made between swaged portion 56c' and washer 57, and increasing the strength with which valve body 56 is prevented from coming free therefrom.

Furthermore, as shown in FIG. 4, as wastegate valve 50 is arranged in the vicinity of valve seat surface 10a provided at exhaust gas flow path 9 (bypass flow path 10) within turbine housing 1, it is exposed to high-temperature exhaust gas. Moreover, while depending on the specifications of the exhaust turbine turbocharger the temperature of the exhaust gas within exhaust gas flow path 9 (bypass flow path 10) may reach 1000° C or more, the present working example is such that wastegate valve 50 is constituted from the high-Ni alloy NCF751 (operating temperature limit 950° C) so as to permit it to accommodate the specifications of exhaust turbine turbochargers (maximum exhaust gas temperature 900° C). That is, attachment plate 52, valve body 56, washer 57, and rotary shaft 58 are all constituted from the high-Ni alloy NCF751.

Operations for the manufacture of wastegate valve 50 will next be described.

To manufacture wastegate valve 50, an operation in which attachment plate 52 is forged, an operation in which rotary shaft main body 58A is friction-welded, a deburring operation, and an operation in which through-hole 54 in attachment plate 52 is formed are conducted during the course of manufacturing a valve manufacturing intermediary U (not shown) at which rotary shaft 58 extends from the side of attachment plate 52 and the overall shape of which is approximately L-shaped as seen in plan view, and an operation is lastly carried out in which swaging is performed to secure valve body 56 to (through-hole 54 of) attachment plate 52 of valve manufacturing intermediary U.

During the operation in which attachment plate 52 is forged, the side of attachment plate 52 is formed into the shape of boss 53, the forming of this into the shape of boss 53 during the forging operation being simple to the extent that the length by which boss 53 protrudes therefrom is small.

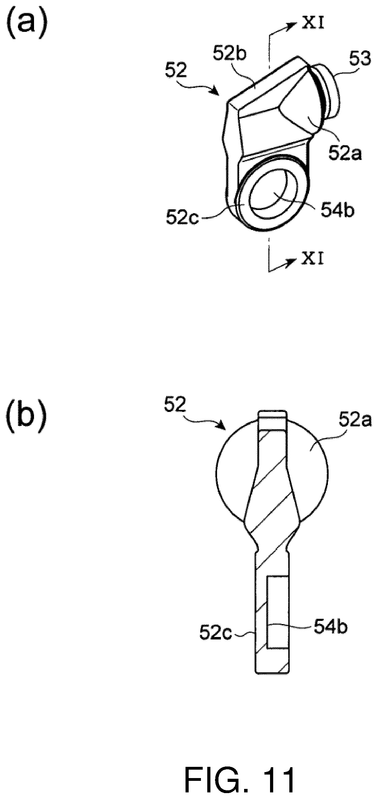

Furthermore, during the operation in which attachment plate 52 is forged, by also forming this into the shape of a concavity (thin-walled region) 54b (see FIG. 11) corresponding to through-hole 54 for causing valve body 56 to be secured thereto by swaging, this will facilitate the operation in which the through-hole 54 for attachment plate 52 is formed that is carried out following the deburring operation which takes place after the friction welding operation. That is, the procedure by which through-hole 54 is formed in concavity (thin-walled region) 54b will be made simple to the extent that the thickness of the material at the bottom of the concavity (thin-walled region) 54b formed in attachment plate 52 is made small.

Furthermore, during the friction welding operation in which rotary shaft main body 58A is joined to the side of attachment plate 52, using a well-known (commonly known) friction welding apparatus, rotary shaft main body 58A and boss 53 formed in protruding fashion at the side of attachment plate 52 are arranged in mutually opposed and coaxial fashion in the horizontal direction, attachment plate 52 is made to move in a direction such as will cause it to approach rotary shaft main body 58A as rotary shaft main body 58A is made to rotate at prescribed speed, application of pressure to the abutting surfaces of rotary shaft main body 58A and boss 53 of attachment plate 52 causing rotary shaft main body 58A to be joined (secured) by friction welding to boss 53 of attachment plate 52.

Because burrs are produced at the outside circumference of joint (joint surface) 59 between rotary shaft main body 58A and boss 53 of attachment plate 52, the burrs are removed during the deburring operation that takes place following the friction welding operation.

Next, during the operation in which the through-hole is formed, procedures are employed to cause formation of a hole at concavity (thin-walled region) 54b corresponding to through-hole 54 provided at attachment plate 52. Note that procedures to cause formation of the hole may be employed at the deburring operation.

As a result of the foregoing operations having been carried out, a valve manufacturing intermediary U at which rotary shaft 58 extends from the side of attachment plate 52 and the overall shape of which is approximately L-shaped as seen in plan view is manufactured. In addition, an operation is lastly carried out in which swaging is performed to secure valve body 56 by way of attachment dowel 56c and washer 57 to (through-hole 54 of) attachment plate 52 of valve manufacturing intermediary U to complete wastegate valve 50 shown in FIGS. 5 and 8.

Rotary shaft 58 of wastegate valve 50 of the present embodiment is thus constituted from boss 53 which is formed so as to protrude slightly from the side of attachment plate 52, and rotary shaft main body 58A which is joined (secured) by means of friction welding to this boss 53, the fact that there is almost no variation in joint strength at joint (joint surface) 59 when the joint has been produced as a result of friction welding being characteristic thereof. This being the case, the joint strength at rotary shaft main body 58A of the wastegate valve 50 that is manufactured is always uniform, and it will be possible to that extent to assure the quality of wastegate valve 50.

Moreover, at wastegate valve 50 in accordance with the present embodiment, because rotary shaft main body 58A is joined (secured) by means of friction welding to boss 53 of attachment plate 52, it is possible to make attachment plate 52, which is made of the expensive high-Ni alloy NCF751, more compact. For this reason, it is firstly the case that the cost of wastegate valve 50 can be reduced, and it will also be possible to reduce overall weight. It is secondly the case that as wastegate valve 50 is arranged in the vicinity of valve seat surface 10a provided at exhaust gas flow path 9 (bypass flow path 10) within turbine housing 1, because the space for arrangement of valve 50 is made small, this alleviates any constraint that might otherwise exist when designing an exhaust gas flow path 9 provided with a bypass flow path 10.

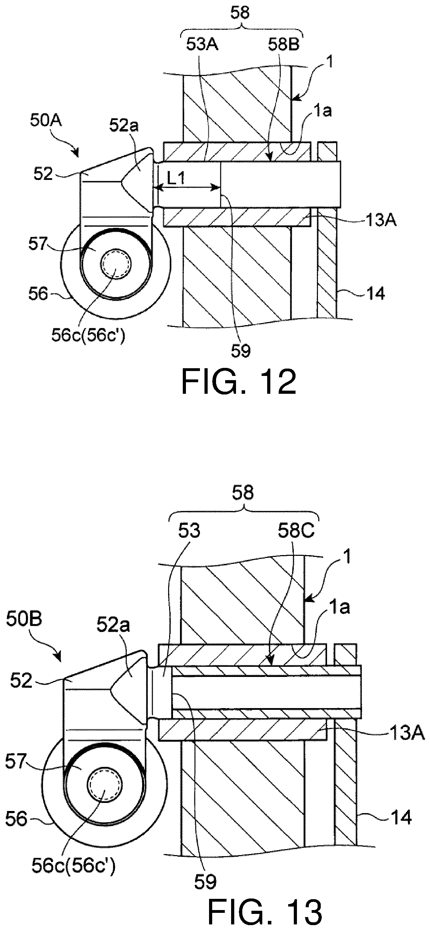

FIG. 12 shows a wastegate valve 50A associated with a second embodiment, this being shown as it would exist when installed at a turbine housing 1.

Rotary shaft 58 of wastegate valve 50A, i.e., rotary shaft 58 which extends from the side of attachment plate 52, is constituted from boss 53A which is formed in protruding fashion at the side of attachment plate 52, and rotary shaft main body 58B which is identical in diameter to boss 53 and which is joined by means of friction welding to boss 53. Stating this another way, boss 53A which is formed in protruding fashion at the side of attachment plate 52, and rotary shaft main body 58B which is joined to boss 53A, cooperate to constitute rotary shaft 58 which bears on bearing 13A provided at turbine housing 1. Note that the length L1 by which boss 53A protrudes is greater than that of boss 53 formed at attachment plate 52 of wastegate valve 50 at the foregoing first embodiment.

Furthermore, while valve body 56 and attachment plate 52 which are directly exposed to exhaust gas are constituted from the high-Ni alloy NCF751 (operating temperature limit 950° C), rotary shaft main body 58B which is in a region distant from attachment plate 52 is constituted from stainless steel (operating temperature limit 850° C).

That is, to the extent that rotary shaft 58 which extends from attachment plate 52 is able to cause the heat that is transmitted thereto from attachment plate 52 to be dissipated to turbine housing 1 it will not need to be as heat-resistant as valve body 56 or attachment plate 52, but regions of rotary shaft 58 that are near attachment plate 52 will reach temperatures (elevated temperatures) close to the temperatures (elevated temperatures) experienced by attachment plate 52 as a result of transmission thereto of heat from the exhaust gas.

For this reason, regions of rotary shaft 58 that are near attachment plate 52 are constituted as boss 53A which is formed in protruding fashion at attachment plate 52, i.e., they are constituted from the high-Ni alloy NCF751 (operating temperature limit 950° C) which has excellent heat resistance. On the other hand, to the extent that exhaust gas heat transmitted to rotary shaft main body 58A which is in a region of rotary shaft 58 that is distant from attachment plate 52 can be dissipated from a location partway therealong to turbine housing 1 by way of boss 53A, this will permit the amount thereof to be reduced; and because it will not reach temperatures as high as those experienced by regions (boss 53A) of rotary shaft 58 near attachment plate 52, the possibility that the mechanical strength thereof will be reduced due to the influence of high temperature is eliminated. Accordingly, as a result of causing rotary shaft main body 58A to be constituted from stainless steel (operating temperature limit 850° C) which is less expensive than the high-Ni alloy NCF751, it is possible to achieve reduction in the unit cost of wastegate valve 50.

FIG. 13 shows a wastegate valve 50B associated with a third embodiment, this being shown as it would exist when installed at a turbine housing 1.

Rotary shaft 58 of wastegate valve 50B is constituted from boss 53 which is formed in protruding fashion at the side of attachment plate 52 constituted from the high-Ni alloy NCF751 (operating temperature limit 950° C), and rotary shaft main body 58C which is in the shape of a hollow pipe, which is constituted from stainless steel (operating temperature limit 850° C), and which is joined (secured) by means of friction welding to boss 53.

In addition, rotary shaft 58 bears on bearing 13A provided at turbine housing 1, and the hollow portion of rotary shaft main body 58C which makes up rotary shaft 58 extends all the way through turbine housing 1 in such fashion as to be open to the exterior of turbine housing 1.

Because rotary shaft main body 58C is hollow and lightweight, the overall weight of wastegate valve 50B will be reduced to a corresponding extent.

Furthermore, convection of the air outside turbine housing 1 occurs where the hollow portion of rotary shaft main body (hollow pipe) 58C is open to the exterior of turbine housing 1. For this reason, because rotary shaft main body 58B is such that heat transmitted thereto from attachment plate 52 is dissipated to turbine housing 1 by way of bearing 13A and is further dissipated by convection of air occurring at the hollow portion, rotary shaft main body 58B need not be as heat-resistant as valve body 56 or attachment plate 52.

That is, even where rotary shaft main body 58B is constituted from metal of lower heat resistance than valve body 56 and attachment plate 52 which are constituted from the high-Ni alloy NCF751 (operating temperature limit 950° C), there will be absolutely no possibility that the heat resistance of rotary shaft 58 will pose a problem. Accordingly, in accordance with the present embodiment, by causing rotary shaft main body 58C to be constituted from stainless steel (operating temperature limit 850° C) which is less expensive than the high-Ni alloy NCF751, it is possible to achieve reduction in the unit cost of wastegate valve 50B.

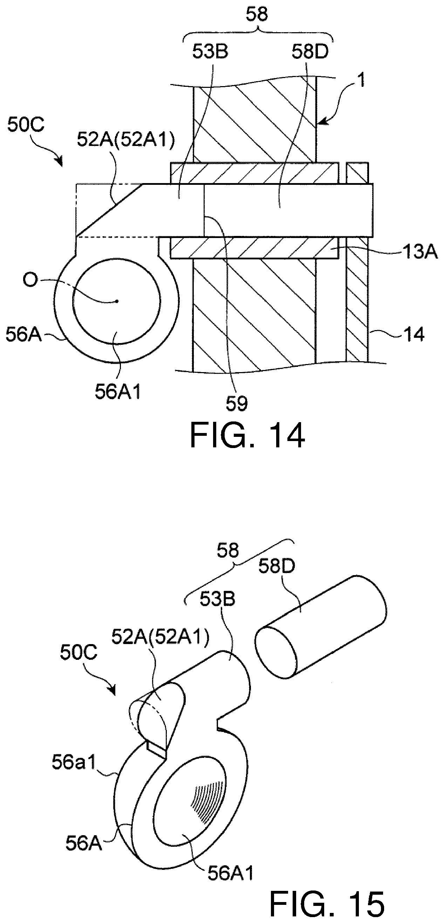

FIGS. 14 and 15 show a wastegate valve 50C associated with a fourth embodiment of the present invention, FIG. 14 being a front view of same wastegate valve 50C, and FIG. 15 being an exploded front perspective view of same wastegate valve 50C.

Wastegate valve 50C is such that valve body 56A and attachment plate 52A are formed in cylindrically integral fashion, and such that rotary shaft 58 extends, in offset fashion with respect to valve body 56A, in a direction perpendicular to central axis O of valve body 56A, from the side of attachment plate 52A which supports valve body 56A, being formed such that the overall shape thereof is approximately L-shaped as seen in plan view.

Rotary shaft 58 which extends from cylindrical attachment plate 52A is constituted from boss 53B which is formed so as to protrude from the side of attachment plate 52A, and rotary shaft main body 58D which is joined (secured) to boss 53B by means of friction welding. Boss 53B and rotary shaft main body 58D are formed so as to be of identical diameter.

Sealing surface 56a1 of valve body 56A is formed as a continuous curved surface that is capable of making contact with annular valve seat surface 10a which is provided at exhaust gas flow path 9 (bypass flow path 10). Provided at the rear surface side of sealing surface 56a1 of valve body 56A is concavity 56A1 for reducing the weight of valve body 56A.

Furthermore, inclined upper edge 52A1 at which what would otherwise be an upper edge right-triangular corner is notched in right-triangular fashion as indicated by the alternating long and short chain line at FIGS. 14 and 15 is provided at the side of attachment plate 52A which is opposite the side at which boss 53B is formed, such that, in similar fashion as with upper edge 52b (see (a) at FIG. 8) formed in cristate fashion at attachment plate 52 of wastegate valve 50 of the first embodiment, there is no reduction in the cross-sectional area of exhaust gas flow path 9 as a result of protrusion by attachment plate 52A into exhaust gas flow path 9.

Furthermore, valve body 56A which is equipped with attachment plate 52A, and rotary shaft main body 58D, which make up wastegate valve 50C, are each constituted from the high-Ni alloy 713c (operating temperature limit 1050° C), these being constituted so as to permit satisfaction of the specifications of exhaust turbine turbochargers for which the temperature of the exhaust gas within exhaust gas flow path 9 (bypass flow path 10) may reach 1000° C or more.

Furthermore, because rotary shaft main body 58D is disposed at a location which is distant from attachment plate 52A by an amount corresponding to the length by which boss 53B protrudes therefrom, it may be constituted from the high-Ni alloy NCF751 (operating temperature limit 950° C) which has a lower operating temperature limit than that of the high-Ni alloy 713c. Furthermore, rotary shaft main body 58D may be constituted from a hollow pipe (see FIG. 13) so as to increase ability of rotary shaft 58 (rotary shaft main body 58D) to dissipate heat.

In accordance with this embodiment, as wastegate valve 50C is constituted from a small number of parts, the constitution of wastegate valve 50C is simplified to a corresponding extent.

However, because manufacture of valve body 56A which is equipped with attachment plate 52A is limited to lost wax casting due to the fact that forging of the high-Ni alloy 713c is difficult, there is no avoiding the fact that the unit manufacturing cost of wastegate valve 50C will be high.

Note that where the specifications of the exhaust turbine turbocharger specify that the temperature of the exhaust gas is 900° C, it will also be possible for wastegate valve 10C to be constituted from the high-Ni alloy NCF751 (operating temperature limit 950° C), which is a heat-resistant alloy. In addition, where wastegate valve 50C is constituted from the high-Ni alloy NCF751, wastegate valve 50C may be manufactured by carrying out an operation in which a valve body 56A equipped with an attachment plate 52A is forged, an operation in which rotary shaft main body 58D is friction-welded, and a deburring operation. That is, among the operations carried out during manufacture of wastegate valve 50 of the first embodiment, as the operation in which through-hole 54 was formed in attachment plate 52 and the operation in which swaging was performed to secure valve body 56 to attachment plate 52 are unnecessary, it will be possible to that extent to reduce the number of manufacturing operations and to manufacture wastegate valve 50C in a short amount of time.

Whereas at the first through third embodiments described above swaging was performed to secure valve body 56 by way of attachment dowel 56c and washer 57 to through-hole 54 provided at attachment plate 52 so that it would not come free therefrom, at wastegate valve 50C associated with this fourth embodiment forging or lost wax casting is performed to integrally form this into the shapes of valve body 56A and attachment plate 52A as shown in FIGS. 14 and 15, the number of parts from which wastegate valve 50C is constituted being made small to a corresponding extent.

Furthermore, whereas the first through fourth embodiments described above were each constituted such that a rotary shaft was made to extend from the side of an attachment plate as a result of causing a rotary shaft main body to be joined (secured) by means of friction welding to the side of the attachment plate, it is also possible for the structure to be such that the rotary shaft main body is joined (secured) to the side of the attachment plate by solid-phase welding other than friction welding; e.g., by resistance welding.

In addition, during the resistance welding operation in which the rotary shaft main body is joined to the side of the attachment plate, a well-known (commonly known) resistance welding apparatus might be used, and, for example, rotary shaft main body 58A and boss 53 formed in protruding fashion at the side of attachment plate 52 might, for example, be arranged in mutually abutting and coaxial fashion in the horizontal direction, the two members 52, 58A might be straddled between electrodes, and a prescribed pressure might be applied thereto and electric current might be made to flow therethrough, so as to cause rotary shaft main body 58A to be joined (secured) by resistance welding to boss 53 of attachment plate 52.

### EXPLANATION OF REFERENCE NUMERALS

- 1: Turbine housing
- 9: Exhaust gas flow path
- 10: Bypass flow path
- 10a: Valve seat surface
- 10b: Opening to exhaust gas flow path of bypass flow path
- 13A: Bearing
- 14: Rotary lever
- 50, 50A, 50B, 50C: Wastegate valve
- 52, 52A: Attachment plate
- 52b: Cristate upper edge of attachment plate
- 52A1: Inclined upper edge of attachment plate
- 52c: Discoid lower region
- 53, 53A: Boss
- 54: Through-hole
- 56: Valve body
- 56A: Valve body equipped with attachment plate
- O: Central axis of valve body
- 56a: Sealing surface of valve body
- 56c: Attachment dowel
- 57: Washer
- 58: Rotary shaft
- 58A, 58B, 58C, 58D: Rotary shaft main body
- 59: Joint surface

## Claims

1. In the context of a wastegate valve formed such that the overall shape thereof is approximately L-shaped as seen in plan view and such that a rotary shaft extends, in a direction approximately perpendicular to a central axis of a valve body and in such fashion as to be offset from the valve body, from an attachment plate which supports the valve body;
the wastegate valve **characterized in that** the rotary shaft is constituted from a rotary shaft main body that is solid-phase-welded to a side of the attachment plate.

2. The wastegate valve according to claim 1 **characterized in that** the rotary shaft is constituted from the rotary shaft main body, and from a boss that is approximately identical in diameter to the rotary shaft main body and that is formed in protruding fashion at the side of the attachment plate.

3. The wastegate valve according to claim 1 or 2 **characterized in that** the rotary shaft main body is constituted from a hollow pipe.

4. The wastegate valve according to claim 3 **characterized in that** the rotary shaft main body extends all the way through a turbine housing of an exhaust turbine turbocharger, and a hollow portion of said rotary shaft main body is open to an exterior of the turbine housing.

5. The wastegate valve according to any of claims 1 through 4 **characterized in that** the valve body is secured to the attachment plate as a result of swaging by way of an attachment dowel and a washer so as not to come free therefrom, and the attachment plate has been shaped as a result of having been forged.

6. The wastegate valve according to any of claims 1 through 4 **characterized in that** the valve body and the attachment plate have been formed into their respective shapes in integral fashion by forging or lost wax casting.
